(19) Europäisches Patentamt
European Patent Office
Office européen des brevets

(11) EP 2 889 733 A1

(12) EUROPEAN PATENT APPLICATION
published in accordance with Art. 153(4) EPC

(43) Date of publication:
01.07.2015 Bulletin 2015/27

(51) Int Cl.:
G06F 3/041 (2006.01)   G02B 26/10 (2006.01)
G03B 21/00 (2006.01)   G06F 3/042 (2006.01)
H04N 5/74 (2006.01)

(21) Application number: 13833575.7

(22) Date of filing: 22.08.2013

(86) International application number:
PCT/JP2013/072463

(87) International publication number:
WO 2014/034527 (06.03.2014 Gazette 2014/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.08.2012  JP 2012186611
27.03.2013  JP 2013066186

(71) Applicant: Citizen Holdings Co., Ltd.
Nishitokyo-shi, Tokyo 188-8511 (JP)

(72) Inventor: IDE, Masafumi
Nishitokyo-shi
Tokyo 188-8511 (JP)

(74) Representative: Patentanwälte
Ruff, Wilhelm, Beier, Dauster & Partner
Kronenstrasse 30
70174 Stuttgart (DE)

(54) INFORMATION INPUT DEVICE

(57)    Provided is an information input device whereby visible laser light which projects an information input image is prevented from irradiating a face or an eye. The information input device includes a projection unit projecting an information input image with visible laser light, a movable support unit mounting the projection unit thereon so that a projection position of the information input image by the projection unit can be changed, a first sensing unit capturing an image of a sensing region within which the information input image can be projected, a second sensing unit which is mounted on the movable support unit and detects an object entering a predetermined region containing the projection position of the information input image and a distance to the object, an information input detection unit detecting information input by identifying, based on image data captured by the first sensing unit, an input operation being performed on the information input image, and an identification control unit which identifies, based on information acquired by the second sensing unit, the presence or absence of a particular object entering the predetermined region and, if the entering of a particular object is detected, then causes the projection unit to stop projecting the information input image.

FIG. 1

## Description

TECHNICAL FIELD

The present invention relates to an information input device, and more particularly to an information input device that uses a projected image for information input.

BACKGROUND ART

Generally, an information input device such as a remote control device is used to input information for operating a television set, a video recorder, or the like. However, when it comes time to use the remote control device or like, the user may have trouble in locating the device because, for example, the user does not know where the device is placed, leading to the problem that the user is unable to use the device when the user desires to use it.

In view of the above, an information input device is known that projects, from an image projection device, an image of an operation unit having a plurality of input keys, and that determines on which input key an operation has been performed by detecting the motion of a finger on the projected image by image recognition (for example, refer to patent document 1). In the information input device disclosed in patent document 1, first the finger placed on the projected image is identified by edge detection from an image captured by an imaging unit, and then the downward motion of the finger, that is, the motion of the finger touching the surface on which the image is projected, is detected. This makes it possible to perform various input operations without operating the information input device itself.

A gestural interface as an wearable information input device is also known in which an image for input operation (pattern) such as a dial pad is projected on a wall, a table, or the palm of a user' hand from a projector worn on the user and, when the projected image for input operation is pointed to by a device worn on the user's fingertip, an input operation corresponding to the image portion thus pointed to is implemented (for example, refer to patent document 2).

In the gestural interface disclosed in patent document 2, the image captured by a camera is analyzed by a computer, and the movement of the device worn on the user's fingertip is tracked to determine whether any corresponding input operation has been performed on the input operation image such as a dial pad. Further, since the image from the projector is projected after being reflected by a mirror, the user can change the projection position of the input operation image as desired by manually adjusting the orientation of the mirror.

CITATION LIST

Patent Documents

Patent document 1: Japanese Unexamined Patent Publication No. H11-95895 (Figure 1)
Patent document 2: U.S. Patent Publication No. 2010/0199232 (Figures 1, 2, and 12)

SUMMARY OF INVENTION

Such information input devices are also called virtual remote control devices, and are used to project an input operation image (pattern) on a suitable object in any desired environment so that anyone can easily perform an input operation. Generally, a visible laser light source is used as the light source for the projector projecting the input operation image. If the visible laser light is irradiated, for example, accidentally into the user's eye, the user's eye may be damaged.

In view of the above, it is an object of the present invention to provide an information input device whereby visible laser light which projects an information input image is prevented as much as possible from irradiating a body part to be protected such as the user's eye.

Provided is an information input device including a projection unit which projects an information input image by using visible laser light, a movable support unit which mounts the projection unit thereon in such a manner that a projection position on which the information input image is to be projected by the projection unit can be changed, a first sensing unit which captures an image of a sensing region within which the information input image can be projected, a second sensing unit which is mounted on the movable support unit, and which detects an object entering a predetermined region containing the projection position of the information input image and detects a distance to the object, an information input detection unit which detects information input by identifying, based on image data captured by the first sensing unit, an image of an input operation being performed on the information input image, and an identification control unit which identifies, based on information acquired by the second sensing unit, the presence or absence of a particular object entering the predetermined region and, if the entering of a particular object is detected, then causes the projection unit to stop projecting the information input image.

Preferably, in the above information input device, the information input detection unit detects information input by identifying, based on image data captured by the first sensing unit and information acquired by the second sensing unit, an image of an input operation being performed on the information input image.

Preferably, in the above information input device, the identification control unit identifies, based on image data captured by the first sensing unit and information acquired by the second sensing unit, the presence or absence of a particular object entering the predetermined region and, if the entering of a particular object is detected, then causes the projection unit to stop projecting the information input image.

Preferably, in the above information input device, the identification control unit identifies a human eye, nose, ear, mouth, face contour, or face as a particular object.

Preferably, in the above information input device, the second sensing unit includes an infrared light emitting unit, an infrared light sensing unit, and a scanning unit which scans the predetermined region in a two-dimensional fashion with an infrared beam that the infrared light emitting unit emits.

Preferably, in the above information input device, the second sensing unit detects the distance to the object entering the predetermined region by using a random dot pattern.

Preferably, in the above information input device, the second sensing unit detects the distance to the object entering the predetermined region by using a position sensitive device.

Preferably, in the above information input device, the first sensing unit includes an infrared light emitting unit and an infrared camera.

Preferably, in the above information input device, the first sensing unit and the second sensing unit respectively use mutually perpendicular linearly polarized infrared lights. This makes it possible to prevent interference between both of the sensing units.

Preferably, in the above information input device, the first sensing unit and the second sensing unit respectively use infrared lights of different wavelengths. This also makes it possible to prevent interference between both of the sensing units.

Preferably, in the above The information input device, the infrared light emitting unit in the first sensing unit and the infrared light emitting unit in the second sensing unit have respectively different emission timings. This also makes it possible to prevent interference between both of the sensing units.

Preferably, in the above information input device, the first sensing unit includes a camera module constructed from a combination of a camera for capturing a color image and an infrared camera for acquiring depth information.

Preferably, the above information input device further includes a projection position control unit which, based on image data captured by the first sensing unit, identifies a target object on which the information input image is to be projected, and controls the movable support unit so as to cause the projection unit to project the information input image by tracking the position of the target object.

According to the above information input device, it is possible to always monitor the sensing region containing the projection position on which the information input image is to be projected by the projection unit, and detect an object entering that region and a distance to the object, since the second sensing unit is mounted on the movable support unit together with the projection unit. Then, it is possible to substantially reduce the possibility of irradiating a body part to be protected such as a human eye for a long time with visible laser light, since the identification control unit identifies, based on information acquired by the second sensing unit, the presence or absence of a particular object such as a human eye or face and, if the entering of a particular object is detected, then causes the projection unit to stop projecting the information input image.

BRIEF DESCRIPTION OF DRAWINGS

Figure 1 is an external perspective view showing the overall configuration of an information input device 1;
Figure 2 is a block diagram showing a configuration example of a control system in the information input device 1;
Figure 3 is a schematic cross-sectional view showing a specific configuration example of a second sensing unit 25;
Figure 4 is a top plan view showing one example of a MEMS mirror 251;
Figure 5 is a flowchart illustrating one example of an initial setup process performed by the control unit 50; Figure 6 is a diagram showing one example of the image produced on the display (not shown) connected to the control unit 50, based on the image data captured by the infrared camera 22 in the first sensing unit 20;
Figure 7 is a diagram for explaining the depth data on the projection surface 41;
Figure 8 is a diagram showing an example of the information input image that the projection device 30 projects;
Figure 9 is a diagram showing another example of the information input image that the projection device 30 projects;
Figure 10 is a flowchart illustrating one example of an information input process performed by the control unit 50;

Figure 11 is a diagram showing one example of an entering object on which grouping is done by the control unit 50;

Figure 12 is a flowchart illustrating one example of a process for detecting the entering of a particular object performed by the control unit 50;

Figure 13 is a conceptual diagram illustrating the projection region and its neighborhood when the information input image 70 is projected on the user's palm by the information input device 1 and an information input operation is performed;

Figure 14 is a flowchart illustrating one example of a palm detection process performed by the control unit 50;

Figure 15 is an explanatory diagram illustrating an example of the case in which the contour of the user's body part forward of the left wrist is identified;

Figure 16 is a diagram showing the information input image 70 projected on the detected palm region 200;

Figure 17 is a flowchart illustrating one example of a process for information input on a palm performed by the control unit 50;

Figure 18 is a diagram showing one example of the contour regions of the user's left hand 180 having been grouped together by the control unit 50 and an object entering the palm region 200;

Figure 19 is a diagram schematically illustrating another configuration example of the projection device 30; and

Figure 20 is a schematic cross-sectional view illustrating a specific configuration example of a second sensing unit 125 when a random dot pattern is used.

DESCRIPTION OF EMBODIMENTS

Hereinafter, with reference to the accompanying drawings, an information input device will be explained. However, it should be noted that the technical scope of the present invention is not limited to embodiments thereof, and includes the invention described in claims and equivalents thereof. In the explanation of the drawings, the same symbols are attached to the same or corresponding elements, and duplicated explanation is omitted. The scale of members is appropriately changed for explanation.

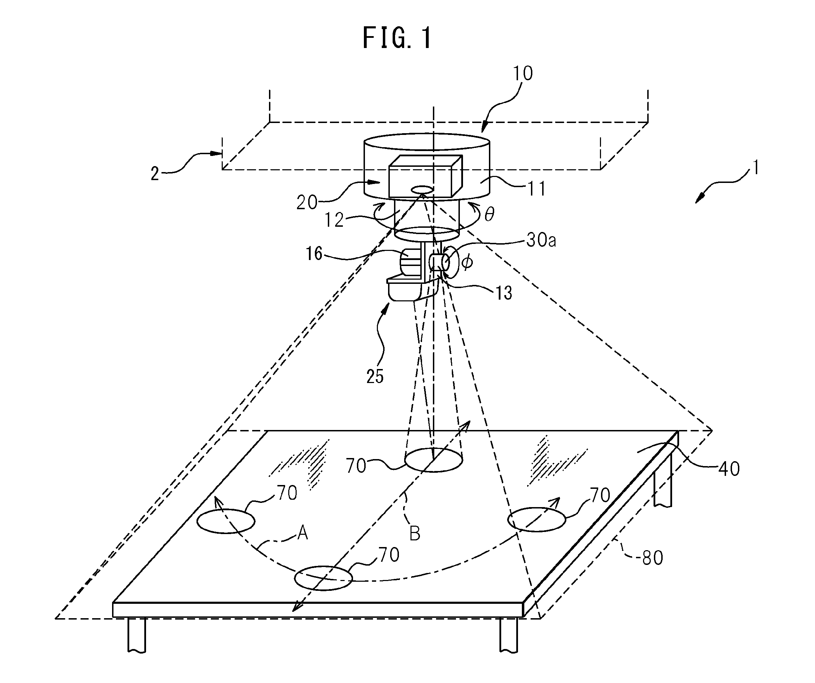

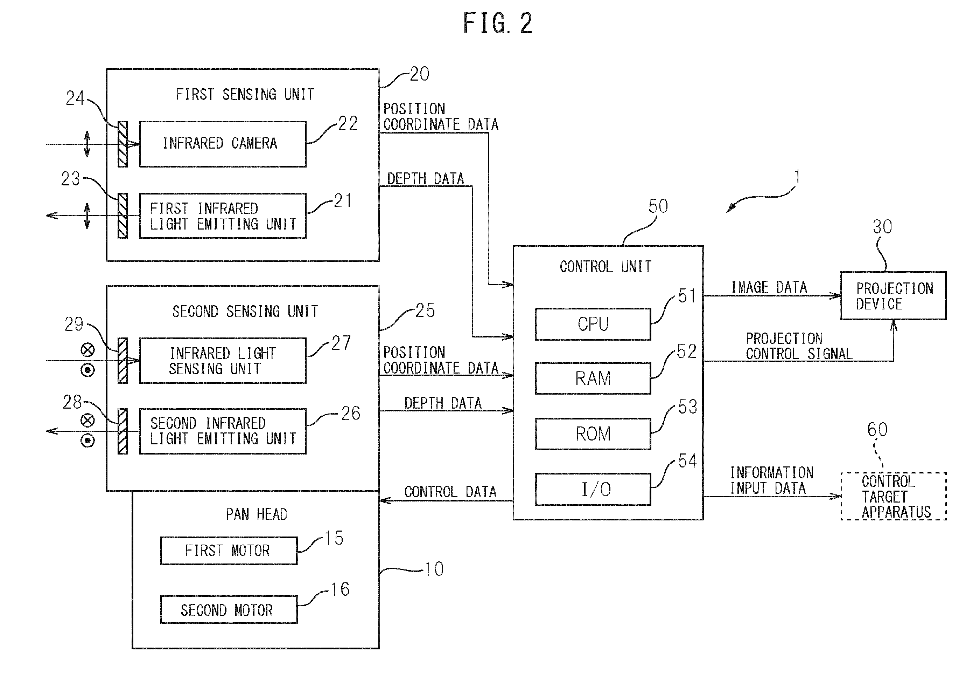

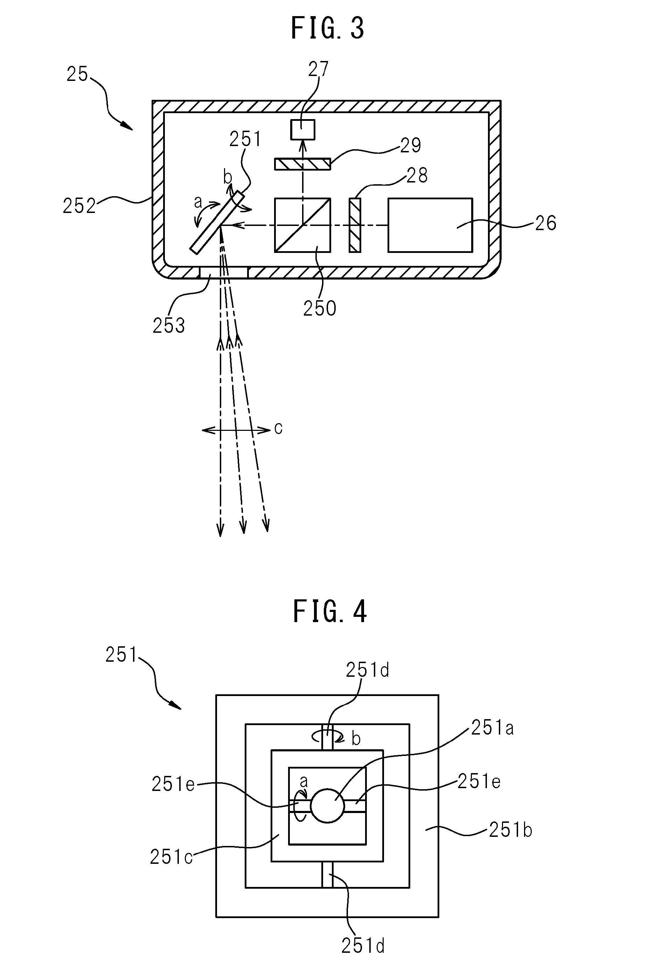

Figure 1 is an external perspective view showing the overall configuration of an information input device 1. Figure 2 is a block diagram showing a configuration example of a control system in the information input device 1. Figure 3 is a schematic cross-sectional view showing a specific configuration example of a second sensing unit 25. Figure 4 is a top plan view showing one example of a MEMS mirror 251.

As shown in Figures 1 and 2, the information input device 1 includes a pan head 10, first and second sensing units 20 and 25, a projection device 30 (only a projection unit 30a is shown in Figure 1), and a control unit 50.

The pan head 10 includes a base 11 fixed to a mounting frame 2 shown by dashed lines in Figure 1, a first rotating part 12 which is rotated in direction $\theta$ by a first motor 15 shown in Figure 2, and a second rotating part 13 which is rotated in direction $\phi$ by a second motor 16.

The first sensing unit 20 is fixed to the base 11 of the pan head 10, and includes a first infrared light emitting unit 21 and an infrared camera 22. The second sensing unit 25 is mounted to the second rotating part 13 of the pan head 10 together with the projection unit 30a of the projection device 30, and includes a second infrared light emitting unit 26 and an infrared light sensing unit 27.

The projection device 30 is constructed from an ultra-compact projector using visible laser light sources, one for each of the RGB colors, and the projection unit (projection head) 30a is mounted to the second rotating part 13 of the pan head 10. Based on the image data received from the control unit 50, the projection device 30 projects an information input image 70 onto a desired position on a table 40 which serves as the projection surface.

The projection device 30 includes, for example, visible laser light sources, a fiber pigtail module, an RGB fiber combiner, a visible single-mode fiber, and the projection unit 30a which is a projection head. The visible laser light sources are RGB light sources each constructed from a semiconductor laser (laser diode). The fiber pigtail module introduces the RGB laser lights from the respective laser light sources into R, G, and B laser light guiding fibers, respectively. The RGB fiber combiner combines the lights from the R, G, and B laser light guiding fibers. The visible single-mode fiber guides the combined light to the projection unit 30a. The projection unit 30a projects the information input image by using the thus guided visible laser light.

All the parts, except the visible single-mode fiber and the projection unit 30a, may be accommodated inside the base 11 of the pan head 10 together with the control unit 50, or a separate control box may be mounted on the mounting frame 2 to accommodate them. Since the projection unit 30a is mounted to the second rotating part 13 of the pan head 10 so that the projection direction can be changed as desired by rotating the first and second rotating parts 12 and 13, the projection position of the information input image 70 can be changed as desired.

The projection device 30 may be constructed from a projector using a monochromatic visible laser light source, etc., as long as the projector is designed to be able to project a predetermined information input image. Further, if the projection device 30 can be made ultra compact in size, the device in its entirety may be mounted to the second rotating part 13 of the pan head 10. In the example of Figure 1, the upper surface of the table 40 is used as the projection surface, but any other suitable member, such as a floor, wall, board, or the user's palm, may be used as the projection surface, as long as it can be touched with the user's fingertip and can be used as a surface on which the predetermined information input image can be projected.

In operation of the first sensing unit 20, infrared light is emitted from the first infrared light emitting unit 21 to irradiate an entire sensing region 80 within which the information input image 70 can be projected, and a reflection of the infrared light reflected from an object located within the sensing region 80 is received by the infrared camera 22 for imaging. The first sensing unit 20 supplies to the control unit 50 position coordinate data and depth data (data pertaining to the distance between the infrared camera 22 and the captured object corresponding to the target pixel) for each pixel of the image captured by the infrared camera 22. In the example shown in Figure 1, the region containing the entire area of the upper surface of the table 40 that serves as the projection surface for the information input image 70 is the sensing region 80.

The first infrared light emitting unit 21 is constructed using an infrared light emitting semiconductor laser (laser diode). In the infrared wavelength range, near-infrared laser light of wavelength in the range of 1400 nm to 2600 nm is called "eye-safe laser" because it does not reach the retina of the human eye and is thus relatively harmless to the eye. It is therefore preferable to use laser light in this wavelength range. However, since using laser light in this wavelength range requires the use of, for example, an expensive InGaAs-based infrared camera to detect its reflection, a low-cost Si-based CMOS or CCD camera may be used in practice. In that case, it is preferable to use a semiconductor laser whose oscillation wavelength is longer than the visible region of the spectrum and falls within a range of 800 nm to 1100 nm to which the Si-based CMOS or CCD camera has sensitivity.

As shown in Figure 2, a polarizer 23 is placed on the front of the first infrared light emitting unit 21. Of the infrared laser light emitted, only the infrared light linearly polarized in a specific direction (for example, P polarized light) is allowed to pass through the polarizer 23 for projection. Similarly, a polarizer 24 is placed on the front of the infrared camera 22. Therefore, of the light reflected from an object, only the infrared light linearly polarized (for example, P polarized light) in the same direction as the projected light is received by the infrared camera 22 for imaging.

In operation of the second sensing unit 25, infrared light emitted from the second infrared light emitting unit 26 is projected over a predetermined region containing the projection position of the information input image 70, and light reflected from an object entering that region is received and sensed by the infrared light sensing unit 27. Then, the second sensing unit 25 supplies the position coordinate data of the object and the depth data representing the distance to the object to the control unit 50.

The second infrared light emitting unit 26 is also constructed using an infrared light emitting semiconductor laser (laser diode), and it is preferable to use an eye-safe laser as in the case of the first infrared light emitting unit 21. However, since an expensive InGaAs-based infrared sensor, for example, has to be used in the case of the wavelength region longer than 1400 nm, a low-cost Si-based photodiode may be used in practice. In that case, it is preferable to use a semiconductor laser whose oscillation wavelength is longer than the visible region of the spectrum and falls within a range of 800 nm to 1100 nm to which the Si-based photodiode has sensitivity.

The infrared light sensing unit 27 includes a photodiode as a light receiving element. The infrared light sensing unit 27 further includes a calculating unit which calculates the position coordinate data of the object from such parameters as the signal sensed by the photodiode, the ratio between the intensity of the sensed signal and the intensity of the emitted infrared laser light, and the projection angle of the infrared laser, and calculates the depth data, i.e., the distance to the detected object, by using a TOF method. However, the function of this calculating unit may be incorporated in the control unit 50.

The TOF (time-of-flight) method is a distance measuring method by which the distance to a target object is calculated based on the time of flight of light (delay time) from the time the light emitted from a light source to the time the light reflected from the object reaches a sensor and on the speed of light (= $3 \times 10^8$ m/s). In the example shown in Figure 2, the depth data can be calculated by measuring the time elapsed from the moment the infrared light is emitted from the second infrared light emitting unit 26 to the moment the reflected light is detected by the photodiode in the infrared light sensing unit 27, and by multiplying the measured time by the speed of light.

In the second sensing unit 25 also, a polarizer 28 is placed on the front of the second infrared light emitting unit 26, as shown in Figure 2. Of the infrared laser light emitted, only the infrared light linearly polarized in a direction (for example, S polarized light) perpendicular to the polarization direction of the infrared light used in the first sensing unit 20 is allowed to pass through the polarizer 28 for projection. Similarly, a polarizer 29 is placed on the front of the infrared light sensing unit 27. Therefore, of the light reflected from an object, only the infrared light linearly polarized (for example, S polarized light) in the same direction as the projected light is received and sensed by the infrared light sensing unit 27.

Thus, the first sensing unit 20 and the second sensing unit 25 respectively use mutually perpendicular linearly polarized infrared lights, as described above. With this arrangement, when the irradiated object has the characteristic that the depolarization occurring on it is small, the S/N ratio can be improved by reducing the interference between the infrared light received by the infrared camera 22 and the infrared light received by the infrared light sensing unit 27.

More specifically, the second sensing unit 25 is preferably configured as shown, for example, in Figure 3. In the second sensing unit 25 shown in Figure 3, the second infrared light emitting unit 26 such as a laser diode and the infrared light sensing unit 27 such as a photodiode are arranged inside a housing 252 having a transparent window 253 in the bottom thereof in such a manner that the optical axis of the emitted infrared light and the optical axis of the received light are at right angles to each other.

Then, the polarizer 28, a beam splitter 250, and the MEMS mirror 251 as a scanning unit are arranged in this order along the optical axis of the infrared light emitted from the second infrared light emitting unit 26. The beam splitter 250 and the MEMS mirror 251 are arranged so that the half-reflecting face of the beam splitter 250 and the mirror face of the MEMS mirror 251 in its neutral position are each oriented at an angle of about 5° to 45° with respect to the optical axis of the emitted infrared light. The polarizer 29 is disposed between the infrared light sensing unit 27 and the beam splitter 250.

The MEMS mirror 251, one example of which is shown in the top plan view of Figure 4, has a mirror face 251a connected via a pair of second supporting members 251e to a sub-frame 251c in such a manner as to be rotatable in the direction of arrow "a", and the sub-frame 251c is connected via a pair of first supporting members 251d to a main frame 251b in such a manner as to be rotatable in the direction of arrow "b". Since the second supporting members 251e are positioned perpendicularly to the first supporting members 251d, the mirror face 251a is supported so as to be rotatable about two axes with respect to the main frame 251b.

The MEMS mirror 251 is formed from a one-piece plate. The first and second supporting members 251d and 251e have elasticity and, when subjected to external forces, allow the mirror face 251a to rotate (vibrate) by resonating in two dimensions at its natural frequency of vibration within a range limited by the elasticity. The MEMS mirror 251 may employ a method in which the second supporting members 251e are driven in a resonant mode and the first supporting members 251d are forcefully driven without using resonance. Means for applying external forces include an electromagnetic coil, a piezoelectric element, etc.

The rotation directions indicated by arrows "a" and "b" in Figure 4 correspond to the directions indicated by arrows "a" and "b" in Figure 3. By rotating the mirror face 251a in the respective directions, the infrared beam projected as indicated by semi-dashed lines can be scanned over the predetermined region in a two-dimensional fashion in the direction of arrow C and the direction perpendicular thereto (i.e., the direction perpendicular to the plane of the figure). Accordingly, the infrared beam formed as a microscopic spot can be moved backward and forward at high speed across the predetermined region in a raster scan fashion. The predetermined region is the sensing region to be sensed by the second sensing unit 25. The predetermined region invariably contains the projection position of the information input image 70 to be projected by the projection unit 30a, and is a little larger than the projection region.

Instead of the MEMS mirror 251 rotating or vibrating in two dimensions as described above, a combination of two vibrating mirrors, such as MEMS mirrors, each of which rotates or vibrates in one dimension, may be used as the scanning unit. If the beam splitter 250 is constructed from a polarizing beam splitter, the polarizers 28 and 29 can be omitted.

The control unit 50 includes a microcomputer including a CPU 51, RAM 52, ROM 53, and I/O 54. The CPU 51 is a central processing unit that performs various calculations and processing. The ROM 53 is a read-only memory that stores fixed data and operating programs to be executed by the CPU 51. The RAM 52 is a random-access memory that temporarily stores input data and other data being processed by the CPU 51. The I/O 54 is an input/output port for transmitting and receiving data to and from the pan head 10, the first sensing unit 20, the projection device 30, and a control target apparatus 60. The control unit 50 may further include a nonvolatile RAM (NVRAM) and a hard disk drive (HDD).

The control unit 50 functions as an information input detection unit which detects information input by identifying, based on the image data captured by the first sensing unit 20 or also based on the information acquired by the second sensing unit 25, an image of an input operation such as an operation performed by a fingertip, etc., on the information input image 70 projected from the projection unit 30a of the projection device 30. The control unit 50 supplies the detected information input data to the control target apparatus 60. The control unit 50 further functions as an identification control unit which identifies, based on the information acquired by the second sensing unit 25, the presence or absence of a particular object entering the predetermined region and, if the entering of a particular object is detected, then issues a projection control signal and thereby causes the projection unit 30a of the projection device 30 to stop projecting the information input image 70.

The control unit 50, which controls the driving of the first and second motors 15 and 16 of the pan head 10 in accordance with control data, can project the information input image 70 onto a desired position on the table 40 by rotating the first and second rotating parts 12 and 13 in Figure 1 and thereby reorienting the projection unit 30a accordingly. When the control unit 50 controls the driving of the first motor 15 so that the first rotating part 12 is rotated in the direction θ, the information input image 70 moves in the direction indicated by arrow A. When the control unit 50 controls the second motor 16 so that the second rotating part 13 is rotated in the direction φ, the information input image 70 moves in the direction indicated by arrow B.

The control target apparatus 60 is, for example, an air-conditioner, a network access apparatus, a personal computer, a television receiver, a radio receiver, or a recording and playback apparatus of a recording medium such as a CD, DVD, or VTR, and performs various kinds of processing based on the information input data.

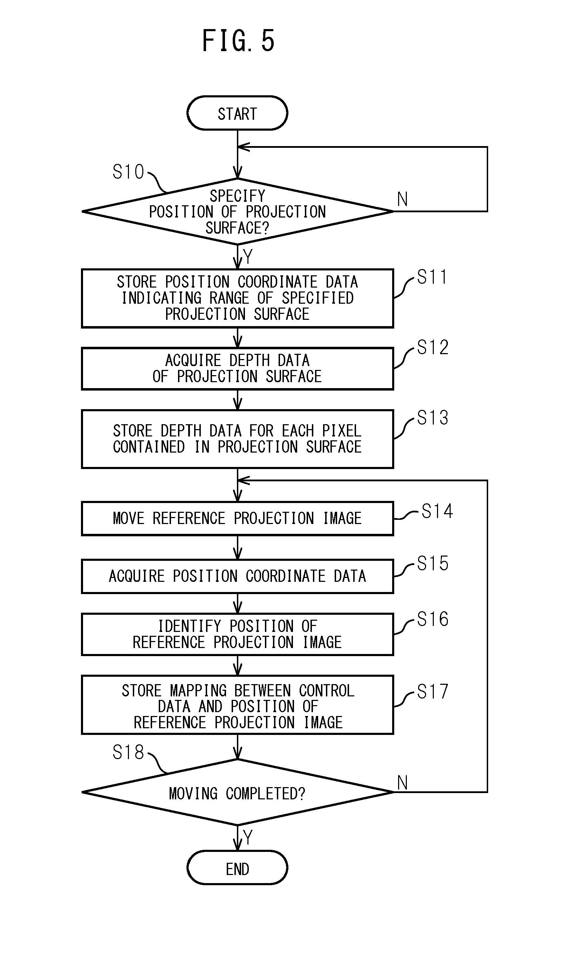

Figure 5 is a flowchart illustrating one example of an initial setup process performed by the control unit 50. The CPU 51 of the control unit 50 executes the process flow of Figure 5 by controlling the pan head 10, the first and second sensing units 20 and 25, and the projection device 30 in accordance with a program prestored in the ROM 53 of the control unit 50. In the following description, the term "step" is abbreviated as "S".

First, a display and an operation unit (keyboard and mouse) not shown are connected to the control unit 50 via the I/O 54. Then, an image based on the image data captured by the infrared camera 22 in the first sensing unit 20 is produced on the display under the control of the control unit 50; in this condition, the process waits until the user specifies the position of the projection surface by using the operation unit (S10). When the position of the projection surface is specified, the control unit 50 stores the position coordinate data indicating the range of the projection surface in the RAM 52, etc., (S11). Once the initialization is performed and initial data are stored at the time of installation, the above initialization steps S10 and S11 can be omitted in the next and subsequent power-up processes, as long as the installation place and conditions remain unchanged.

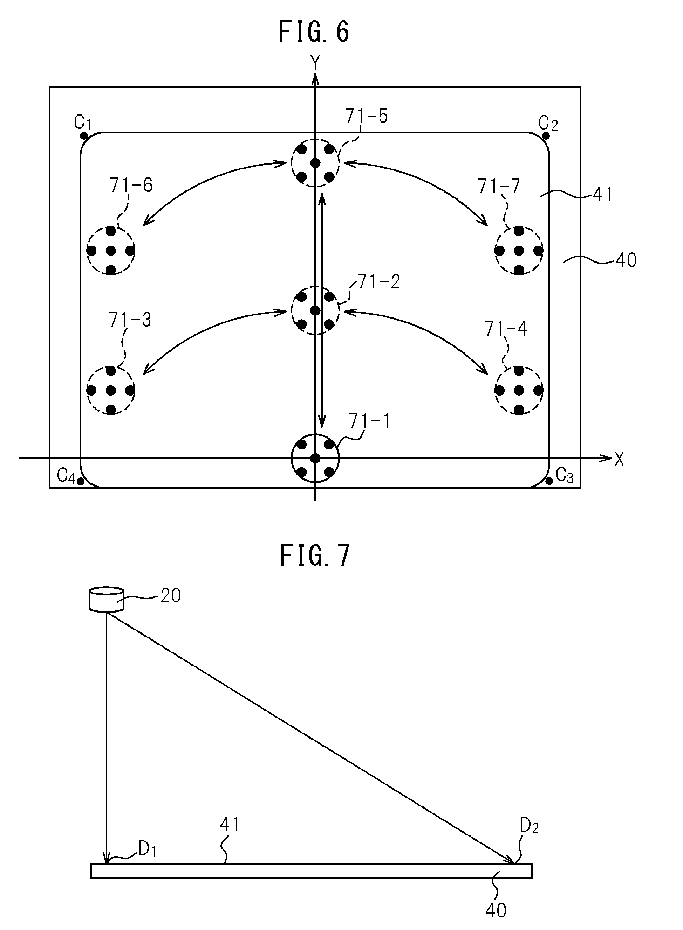

Figure 6 is a diagram showing one example of the image produced on the display based on the image data captured by the infrared camera 22 in the first sensing unit 20. For example, by specifying four points C1 to C4 on the table 40, the surface defined within the region bounded by the lines joining the four points is specified as the projection surface 41. If the difference between the projection surface 41 and the background is distinctly identifiable, the control unit 50 may automatically specify the projection surface 41 by using known image processing techniques. If the entire area captured by the first sensing unit 20 is used as the projection surface 41, S10 may be omitted.

Next, the control unit 50 acquires the depth data of the projection surface 41 from the first sensing unit 20 (S12), and stores the depth data in the RAM 52 for each pixel contained in the region specified as the projection surface 41 (S13).

Figure 7 is a diagram for explaining the depth data on the projection surface 41. As shown in Figure 7, the point D1 on the projection surface 41 that is located directly below the first sensing unit 20 and the point D2 on the projection surface 41 that is located farther away from the first sensing unit 20 are on the same table 40, but there occurs a difference in the depth data acquired from the first and second sensing units 20 and 25. In view of this, the position coordinate data and depth data are acquired and stored in advance for all the pixels on the projection surface 41.

Next, the control unit 50 transmits predetermined image data to the projection device 30 to project a reference projection image 71 from the projection unit 30a onto the projection surface 41, and transmits predetermined control data to the pan head 10 to move the reference projection image 71 to a reference position by controlling the pan head 10 (S14). The reference projection image 71 is one that contains five black dots displayed within a circular frame, as indicated by each of reference numerals 71-1 to 71-7 in Figure 6. The reference projection image 71 shown in Figure 6 is one example, and any other suitable image may be used. The reference projection image 71-1 in Figure 6 is the reference projection image that is projected on the reference position of the illustrated example located directly below the pan head 10. The positional relationship between the pan head 10 and the projection surface 41, and the reference position of the projected image can be determined suitably according to the situation.

Next, the control unit 50 acquires the position coordinate data from the first and second sensing units 20 and 25 (S15). Then, using the five black dots, the control unit 50 identifies the position of the reference projection image 71 (S16), and stores a mapping between the control data transmitted to the pan head 10 and the position coordinate data of the identified reference projection image 71 in a data table constructed within the RAM 52 (S17).

After that, the control unit 50 determines whether the reference projection image 71 has been moved to every possible region on the projection surface 41 (S18). If there is any remaining region (No in S18), the process returns to S14. In this way, the control unit 50 repeats the process from S14 to S17 by sequentially moving the reference projection image 71 from 71-2 through to 71-7 in Figure 6 at predetermined intervals of time so as to cover the entire area on the projection surface 41. The reference projection images 71-2 to 71-7 in Figure 6 are only examples, and the amount by which the reference projection image 71 is moved each time in order to identify the position can be suitably determined.

By repeating the process from S14 to S17 a certain number of times, the control unit 50 completes the construction of the data table that provides a mapping between the control data and the position coordinate data of the projected image for the entire area of the projection surface 41. Then, when it is determined by the control unit 50 that the reference projection image 71 has been moved to every possible region on the projection surface 41 (Yes in S18), the process of Figure 5 is terminated, since the construction of the data table is completed.

Using the completed data table, the control unit 50 can control the pan head 10 so that the projected image from the projection unit 30a is moved to the desired position on the specified projection surface 41. Conversely, by using the data table, the control unit 50 can identify the position of the currently projected image on the projection surface 41.

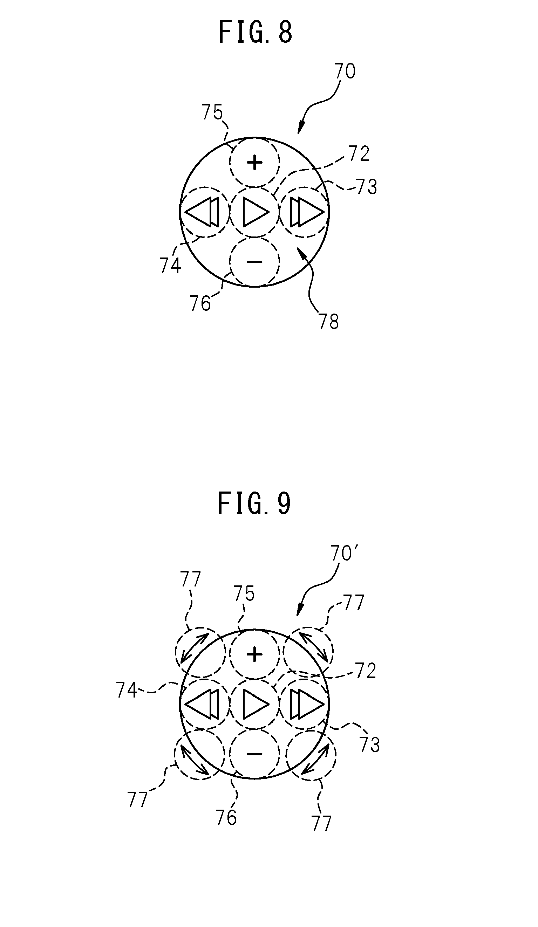

Figure 8 is a diagram showing an example of the information input image that the projection device 30 projects. The information input image 70 shown in Figure 8 contains a playback button 72, a fast forward button 73, a rewind button 74, a channel UP button 75, and a channel DOWN button 76 for a video tape recorder (VTR). When the fingertip is positioned, as will be described later, on a selected one of the regions enclosed by dashed lines in the information input image 70, it is determined that an information input operation corresponding to the selected button has been performed.

Figure 9 is a diagram showing another example of the information input image. The information input image 70' shown in Figure 9 contains, in addition to the buttons contained in the information input image 70 shown in Figure 8, rotation buttons 77 for rotating the information input image 70'. These information input images are only examples, and the projection device 30 can project various kinds of information input images based on the image data supplied from the control unit 50.

Based on the image data to be transmitted to the projection device 30, the control unit 50 can identify the kinds of the input buttons contained in the information input image and the positions of the buttons on the information input image. Further, the control unit 50 can identify the position of the information input image on the projection surface 41, based on the data table constructed in S17 of Figure 5 and the control data transmitted to the pan head 10. Accordingly, the control unit 50 can identify the position of each button on the projection surface 41, based on the image data to be transmitted to the projection device 30 and the control data transmitted to the pan head 10.

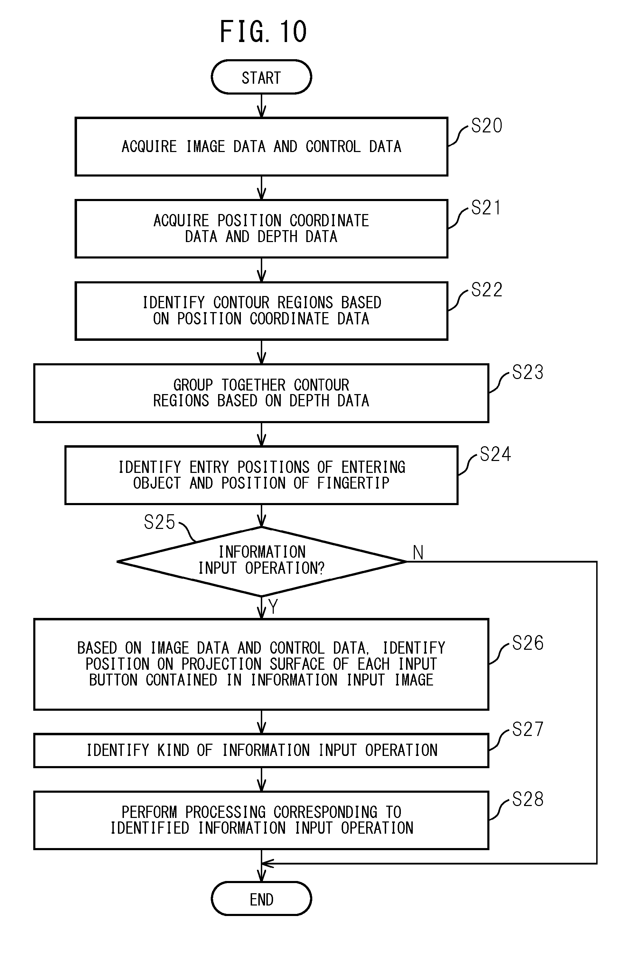

Figure 10 is a flowchart illustrating one example of an information input process performed by the control unit 50. The CPU 51 of the control unit 50 executes the process flow of Figure 10 by controlling the pan head 10, the first and second sensing units 20 and 25, and the projection device 30 in accordance with a program prestored in the ROM 53 of the control unit 50.

First, the control unit 50 acquires the image data to be transmitted to the projection device 30 and the control data transmitted to the pan head 10 (S20). Then, the control unit 50 acquires the position coordinate data and depth data from the first and second sensing units 20 and 25 (S21). The order of S20 and S21 may be interchanged.

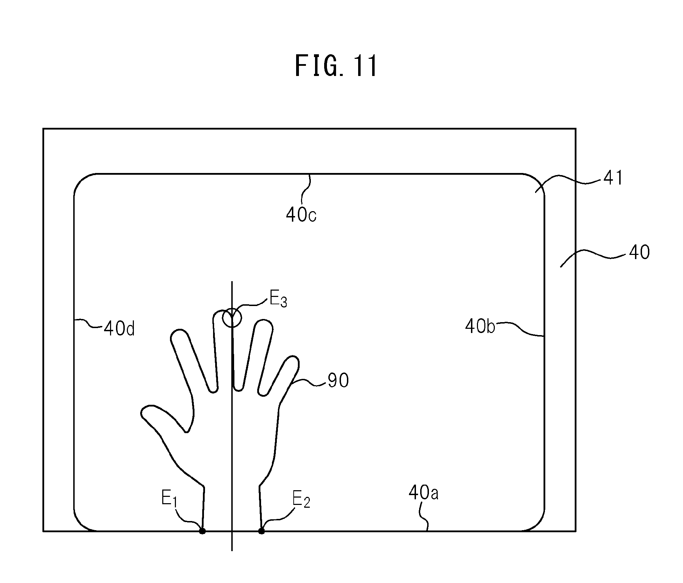

Next, based on the position coordinate data acquired in S21, the control unit 50 identifies image contour regions (S22). More specifically, the control unit 50 identities the contour regions of an entering object (for example, a hand's contour region 90 such as shown in Figure 11 to be described later) by calculating the difference between the depth data of the projection surface stored in S12 of Figure 5 and the depth data acquired in S21 of Figure 10 and by extracting pixels for which the difference lies within a predetermined threshold (for example, within 10 mm).

Next, based on the depth data acquired in S21, the control unit 50 groups together the contour regions having substantially the same depth data from among the contour regions identified in S22 (S23).

Figure 11 is a diagram showing one example of an entering object on which grouping is done by the control unit 50. In the example shown in Figure 11, the entering object is a human hand, and its contour region 90 is identified in S22. The contour region 90 is a group of regions having substantially the same depth data.

Next, based on the contour regions grouped together in S23, the control unit 50 identifies the positions at which the entering object has entered the projection surface and the position of the fingertip (S24).

In the example of Figure 11, the control unit 50 identifies the entry positions $E_1$ and $E_2$ by determining that the entering object has entered the projection surface 41 from one side 40a of the projection surface 41. The entry positions $E_1$ and $E_2$ correspond to the points at which the contour region 90 of the entering object contacts the one side 40a of the projection surface 41. Next, the control unit 50 identifies the position of the fingertip by detecting the point $E_3$ at which the straight line drawn from the midpoint between the entry positions $E_1$ and $E_2$ perpendicular to the one side 40a of the projection surface 41 crosses the contour region 90 at the position farthest from the one side 40a of the projection surface. The above method of identifying the position of the fingertip based on the entry positions $E_1$ and $E_2$ is only one example, and the position of the fingertip may be identified by some other suitable method that uses the entry positions $E_1$ and $E_2$.

Next, the control unit 50 determines whether the entering object is performing an information input operation (S25). Even if the entering object exists within the sensing region 80 shown in Figure 1, the object may have merely entered the region without any intention of performing an information input operation. Therefore, if, for example, the point $E_3$ of the fingertip position in Figure 11 is located on the projection surface 41, then the control unit 50 determines that the fingertip of the contour region 90 is performing an information input operation.

The control unit 50 determines whether the point $E_3$ of the fingertip position is located on the projection surface 41 or not, based on whether the difference between the depth data of the projection surface 41 acquired in advance in S12 of Figure 5 and the depth data of the point $E_3$ of the fingertip position acquired in S21 of Figure 10 lies within a predetermined threshold (for example, within 10 mm). That is, if the difference between the depth data of the point $E_3$ of the fingertip position and the depth data of the projection surface 41 at the position coordinates representing the point $E_3$ lies within the predetermined threshold, the control unit 50 determines that the fingertip at the detected position is intended for an information input operation.

The depth data of the point $E_3$ of the fingertip position may fluctuate over a short period of time because of chattering, etc. Accordingly, in order to prevent an erroneous detection, the control unit 50 may determine that an information input has been done only when the difference between the depth data of the point $E_3$ of the fingertip position and the depth data of the projection surface 41 at the position coordinates representing the point $E_3$ has remained within

the predetermined threshold continuously for a predetermined length of time (for example, one second or longer).

If it is determined by the control unit 50 that the fingertip at the detected position is intended for an information input operation (Yes in S25), the position on the projection surface 41 of each input button contained in the information input image 70, such as shown in Figure 8, is identified based on the image data transmitted to the projection device 30 and the control data transmitted to the pan head 10 (S26). If it is determined by the control unit 50 that the fingertip at the detected position is not intended for an information input operation (No in S25), the process of Figure 10 is terminated.

When the position of each input button on the projection surface 41 is identified in S26, the control unit 50 identifies the kind of the information input operation, based on the point $E_3$ of the fingertip position identified in S24 and the position of each input button on the projection surface 41 identified in S26 (S27). For example, if the coordinates of the point $E_3$ of the fingertip position lie within the range of the playback button 72 shown in Figure 8, the control unit 50 determines that the operation indicated by the information input is "playback". If there is no input button that matches the position coordinate data of the point $E_3$ of the fingertip position, it may be determined that there is no information input corresponding to it, or it may be determined that some other information input (for example, for moving the position of the information input image) has been done as will be described later.

Next, the control unit 50 performs processing corresponding to the kind of the information input operation identified in S27 on the control target apparatus 60 shown in Figure 2 (S28), and terminates the sequence of operations. For example, if the operation indicated by the identified information input is "playback", the control unit 50 sends a "playback" signal to the control target apparatus 60. The control unit 50 carries out the process flow of Figure 10 repeatedly at predetermined intervals of time.

The process flow of Figure 10 is repeatedly performed by the control unit 50. Therefore, by just touching the fingertip to the desired input button (for example, the playback button 72) contained in the information input image 70 projected on the projection surface 41, the user can perform information input, for example, for "playback" in a virtual environment without using a device such as a remote control.

Next, a description will be given of how to detect a particular object, such as a human face, eye, etc., entering the projection space through which the information input image 70 is projected from the projection unit 30a onto the table 40 in Figure 1 (i.e., the space between the projection unit 30a and the information input image 70 on the table 40).

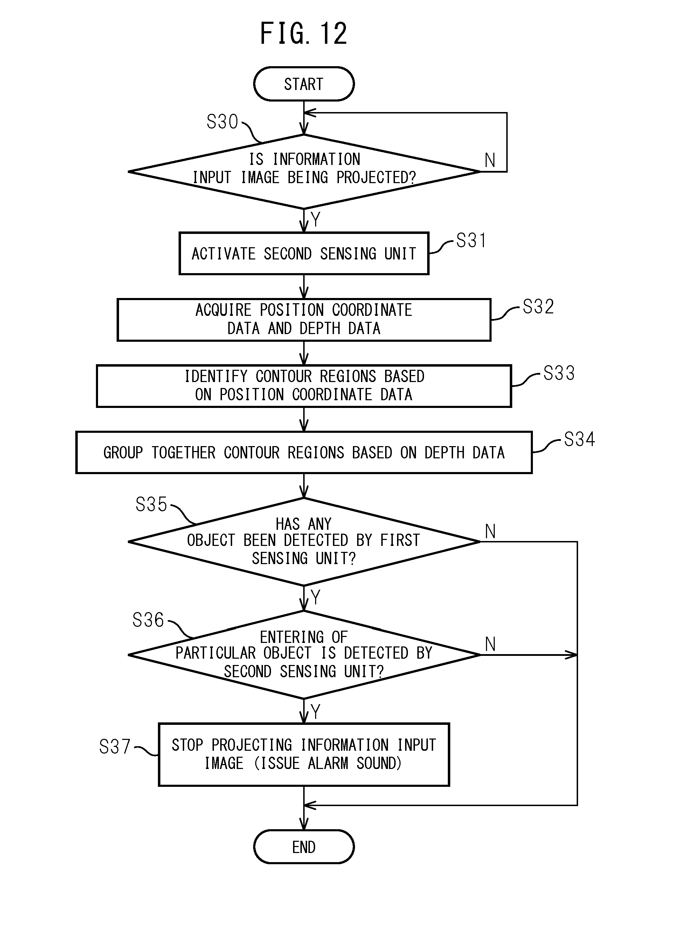

Figure 12 is a flowchart illustrating one example of a process for detecting the entering of a particular object performed by the control unit 50. The CPU 51 of the control unit 50 executes the process flow of Figure 12 by controlling the pan head 10, the second sensing unit 25, and the projection device 30 in accordance with a program prestored in the ROM 53 of the control unit 50.

First, the control unit 50 determines whether the projection device 30 is projecting an information input image (S30) and, if it is projecting an information input image (Yes in S30), then activates the second sensing unit 25 (S31). Alternatively, the control unit 50 may activate the second sensing unit 25 in S31 when an information input image is being projected and further an object is detected at a position spaced more than a predetermined distance away from the projection surface 41 (the table 40) within the sensing region 80 based on the sensing information (position coordinate data and depth data) acquired from the first sensing unit 20.

If it is determined in S30 that the projection device 30 is not projecting an information input image (No in S30), or if it is determined that the projection device 30 is not projecting an information input image and further no object is detected at any position spaced more than a predetermined distance away from the projection surface 41 based on the sensing information acquired from the first sensing unit 20, the process may wait until an information input image is projected and an object is detected, or the process of Figure 12 may be terminated. In that case, S30 is preferably performed at predetermined intervals of time.

When the second sensing unit 25 is activated, the control unit 50 acquires the position coordinate data and depth data of the object detected at each scan point within the predetermined region (S32).

Then, based on the acquired position coordinate data, the control unit 50 identifies the contour regions of the object (S33). Further, based on the depth data, the control unit 50 groups together the contour regions having substantially the same depth data (S34). After that, the control unit 50 determines whether any object has been detected by the first sensing unit 20 (S35). If no object has been detected (No in S35), the process is terminated. On the other hand, if any object has been detected (Yes in S35), the control unit 50 determines whether the detected object indicates the detection of the entering of a particular object, based on the grouping of contour region data by the second sensing unit 25 (S36). More specifically, the control unit 50 determines whether the entering of a particular object has been detected or not, for example, by checking whether or not a contour pattern having a depth within a predetermined range is approximate or similar to any one of the particular object patterns prestored in the ROM 53, etc.

For this purpose, pattern data representing the characteristic features of the body parts to be protected, for example, a human eye, nose, ear, mouth, face, face contour, etc., are prestored as detection target data of particular objects in the ROM 53, etc.

If it is determined that the detected object does not indicate the detection of the entering of a particular object (No in S36), the process of Figure 12 is terminated. On the other hand, if it is determined that the detected object indicates the detection of the entering of a particular object (Yes in S36), the control unit 50 issues a projection stop signal as the projection control signal to the projection device 30 shown in Figure 2 to stop the projection of the information input image (S37). In this case, it is preferable to also issue an alarm sound to alert the user. After that, the process of Figure 12 is terminated.

In this way, when the entering of a particular object is detected, the emission of the RGB visible laser light from the projection unit 30a shown in Figure 1 can be stopped to prevent the visible laser light from irradiating the human face or eye.

As described above, when the information input image is being projected, or when the information input image is being projected and further the presence of an object that is likely to be a particular object is detected within the sensing region 80 based on the sensing information acquired from the first sensing unit 20, the control unit 50 activates the second sensing unit 25 which can always scan at high speed across the predetermined region containing the projection region where the information input image is projected from the projection unit 30a. Then, when the entering of a particular object such as a human eye or face has entered the projection region, the second sensing unit 25 quickly and accurately detects it by using the TOF method based on the sensing information, and thus the projection device 30 can be caused to stop projecting the information input image 70. This serves to greatly improve the safety.

Since the refresh rate of the infrared camera 22 is about 30 frames per second, it is not possible to track quick movement of the human face, etc., by simply using the sensing information acquired from the first sensing unit 20. Therefore, by making use of the highspeed capability of the second sensing unit 25, the human face or eye entering the image projection area is quickly detected and the emission of the visible laser light is stopped. Furthermore, since the second sensing unit 25 is integrally mounted to the second rotating part 13, i.e., the movable supporting member of the pan head 10, together with the projection unit 30a of the projection device 30, even if the projection region of the information input image 70 projected from the projection unit 30a is moved, the second sensing unit 25 can always scan at high speed across the predetermined region containing the projection region of the information input image 70.

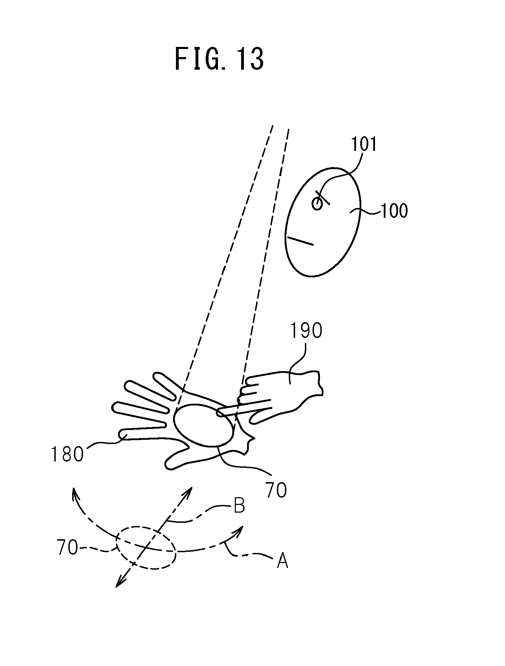

Figure 13 is a conceptual diagram illustrating the projection region and its neighborhood when the information input image 70 is projected on the user's palm by the information input device 1 and an information input operation is performed. In this case, a compact pan-tilt unit may be used instead of the pan head 10 in Figure 1. In that case also, the first sensing unit 20 must be provided, but in Figure 13, the first sensing unit 20 is omitted from illustration.

The projection device 30 such as a laser projector, shown in Figure 2, emits visible laser light of RGB colors in response to the image data received from the control unit 50, and guides the visible laser light through optical fiber to the ultra-compact projection unit 30a shown in Figure 1. In the example shown in Figure 13, the information input image 70 is projected from the projection unit 30a on the palm of the left hand 180 which serves as the projection surface.

The projection device 30, which projects the information input image 70 by using the visible laser light, has the characteristic of being able to always project the information input image 70 with a good focus on the projection surface irrespectively of the distance between the projection surface and the projection unit 30a (focus-free characteristic). It will be appreciated that any suitable projection device other than the projector using the RGB color lasers may be used, as long as it is designed to be able to project a predetermined information input image.

In the example of Figure 13, the palm of the user's left hand 180 is used as the projection surface, but some other part of the user's body can be used as the projection surface if such body part is sufficiently flat and recognizable.

The control unit 50 shown in Figure 2 detects that the information input image 70 projected on the palm of the user's left hand 180 by the projection device 30 has been touched with the fingertip of the user's right hand 190, and performs processing such as outputting the resulting information input data to the control target apparatus 60.

Based on the information acquired by the infrared camera 22 in the first sensing unit 20, the control unit 50 identifies the target body part, i.e., the palm of the user's left hand 180, on which the information input image 70 is to be projected. Then, the control unit 50 controls the first and second motors 15 and 16 in accordance with control data so as to track the position of the target body part, and thereby causes the projection unit 30a to project the information input image 70 on the palm of the user's left hand 180.

When the control unit 50 controls the first motor 15 of the pan head 10 so that the first rotating part 12 shown in Figure 1 is rotated in the direction θ, the information input image 70 shown in Figure 13 moves in the direction indicated by arrow A. When the control unit 50 controls the second motor 16 of the pan head 10 so that the second rotating part 13 is rotated in the direction φ, the information input image 70 moves in the direction indicated by arrow B. When the palm region is recognized by the method to be described later, the control unit 50 derives its spatial coordinates (x,y,z) from its position data (x,y) and depth data (r) and, using the data table, causes the information input image 70 to be projected on the palm.

That is, the control unit 50 functions as a projection position control unit which tracks the position of the palm of the user's left hand 180 as the target body part and changes the projection position of the information input image 70 accordingly. The control unit 50 also functions as an information input detection unit which detects an information input operation performed on the information input image 70, based on the sensing information acquired from the first sensing unit 20 or the second sensing unit 25.

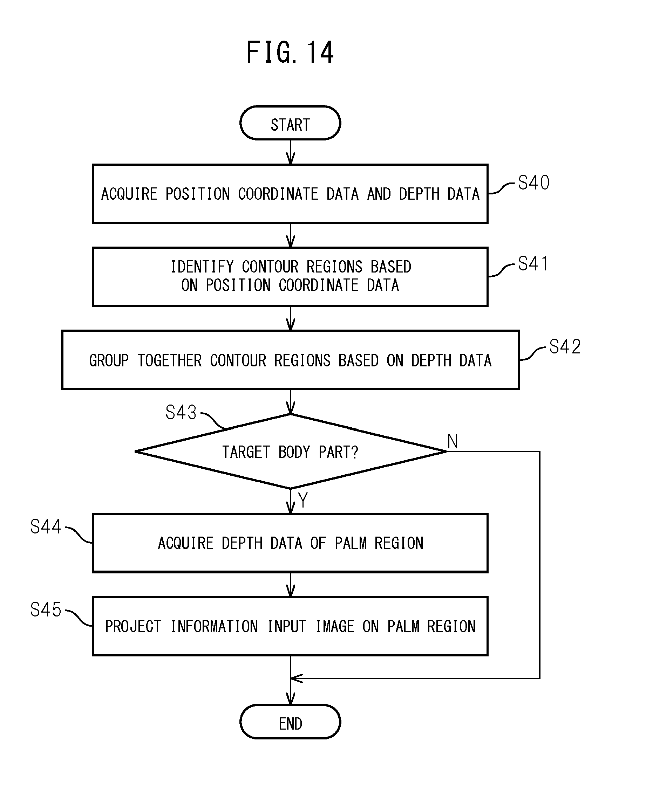

Figure 14 is a flowchart illustrating one example of a palm detection process performed by the control unit 50. The CPU 51 of the control unit 50 executes the process flow of Figure 14 by controlling the pan head 10, the first sensing unit 20, and the projection device 30 in accordance with a program prestored in the ROM 53 of the control unit 50.

First, the control unit 50 acquires the position coordinate data and depth data from the first sensing unit 20 (S40). Next, based on the position coordinate data acquired in S40, the control unit 50 identifies the regions containing object contours (S41). Then, based on the depth data acquired in S40, the control unit 50 groups together the regions having substantially the same depth data from among the regions containing the contours (S42).

Next, the control unit 50 determines whether the object contour regions grouped together in S42 represent the target body part which is the body part forward of the wrist, by comparing their pattern against the patterns prestored in the ROM 53, etc., (S43). For example, when the user is sitting, a plurality of groups of contour regions (legs, face, shoulders, etc.) of the entering object may be detected, but only the target body part, which is the body part forward of the wrist, can be identified by pattern recognition.

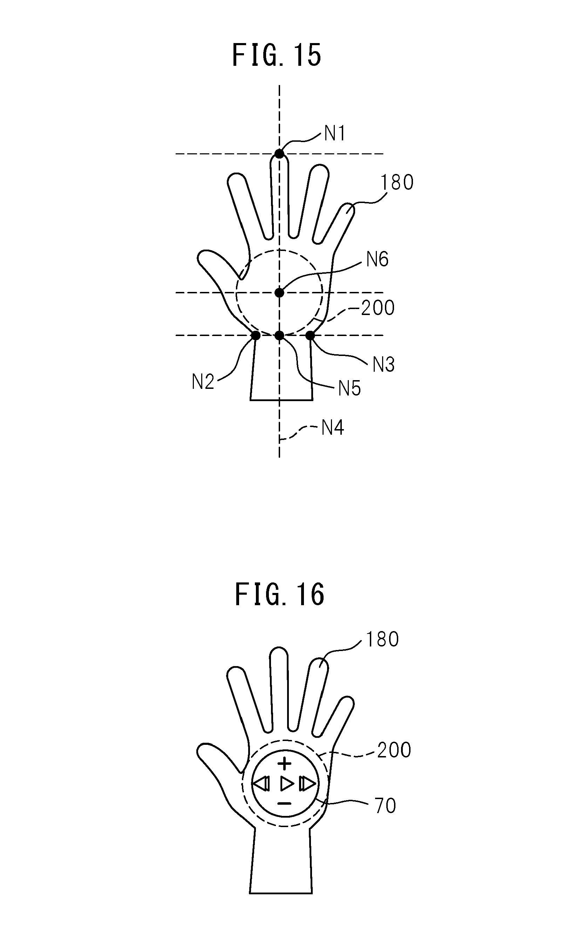

Figure 15 is an explanatory diagram illustrating an example of the case in which the contour of the user's body part forward of the left wrist is identified. The same applies to the case in which the contour of the user's body part forward of the right wrist is identified.

If it is determined in S43 that the entering object is the user's left hand 180 which is the target body part, the control unit 50 detects the palm region 200 indicated by a dashed circle on the left hand 180 in Figure 15, acquires the depth data of the palm region 200 (S44), and stores the data in the RAM 52, etc., shown in Figure 2.

The palm region 200 is detected from the contour (outline) of the identified left hand 180, for example, in the following manner. In Figure 15, first a straight line N4 is drawn that joins the fingertip position N1 to the midpoint N5 between the wrist positions N2 and N3, and then a circular region is defined whose center point N6 is located on the straight line N4 one-quarter of the way from the midpoint N5 to the fingertip position N1 and whose radius is given by the distance from the center point N6 to the midpoint N5; this circular region is detected as the palm region 200. The method of determining the palm region 200 is not limited to this particular method, but any other suitable method may be employed.

Next, the control unit 50 derives the spatial coordinates (x,y,z) of the center point N6 from the position data (x, y) and depth data (r) of the center point N6 of the palm region 200. Then, using the data table constructed in S17 of Figure 5, the control unit 50 controls the pan head 10 so that the information input image 70 is projected on the palm region 200 (S45). After that, the control unit 50 terminates the sequence of operations. The control unit 50 repeatedly performs the process flow of Figure 14 at predetermined intervals of time (for example, every one second) until the target body part (the part forward of the left wrist) is identified.

Figure 16 is a diagram showing the information input image 70 projected on the detected palm region 200. Since the size of the projected image is determined by the distance from the projection unit 30a to the palm region 200, if the projected image is always of the same size, the information input image 70 may not always fit within the palm region 200.

Therefore, the control unit 50 performs control so that the information input image 70 will always fit within the palm region 200 by increasing or reducing the size of the projected image based on the depth data of the center point N6 shown in Figure 15. Further, when the user's palm is detected, the control unit 50 controls the pan head 10 to reorient the projection unit 30a so as to follow the user's palm, thus moving the projection position of the information input image 70 as the user's palm moves.

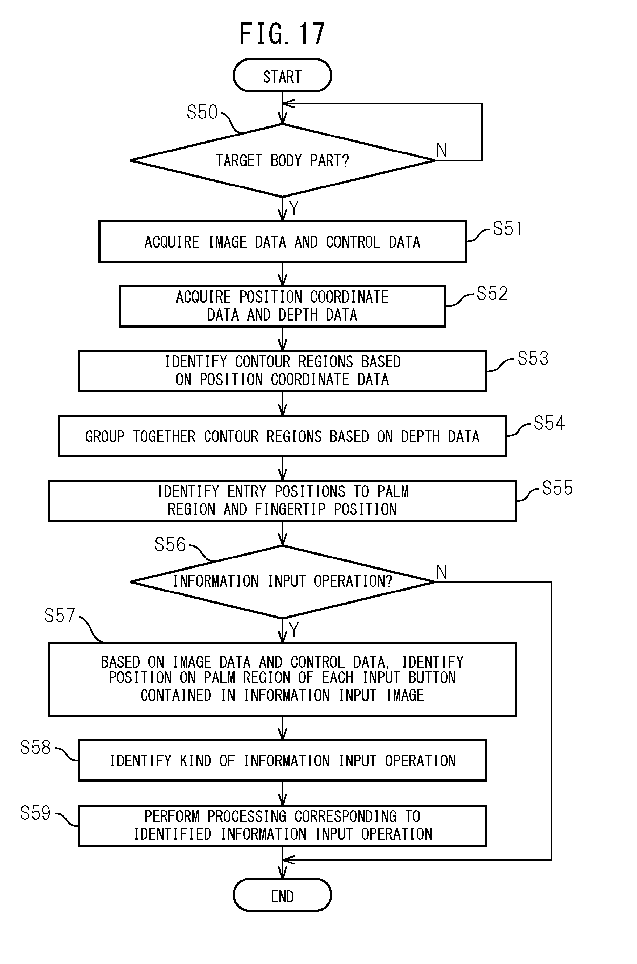

Figure 17 is a flowchart illustrating one example of a process for information input on a palm performed by the control unit 50. The CPU 51 of the control unit 50 also executes the process flow of Figure 17 by controlling the pan head 10, the first and second sensing units 20 and 25, and the projection device 30 in accordance with a program prestored in the ROM 53 of the control unit 50.

First, the control unit 50 determines whether the target body part (the part forward of the left wrist) has been identified or not (S50), and proceeds to carry out the following steps only when the target body part has been identified.

When the target body part has been identified in S50, the control unit 50 acquires the image data transmitted to the projection device 30 and the control data transmitted to the pan head 10 (S51). Next, the control unit 50 acquires the position coordinate data and depth data primarily from the second sensing unit 25 (S52). The order of S51 and S52 may be interchanged.

Next, the control unit 50 identifies the contour data of the detected object, based on the position coordinate data acquired in S52 (S53). Then, based on the depth data acquired in S52, the control unit 50 groups together the contour regions having substantially the same depth data (S54). Further, based on the contour regions thus grouped together, the control unit 50 identifies the entry positions through which the entering object has entered the palm region 200 and the position of the fingertip (S55). There may be more than one entering object on which grouping is done in S54, but the control unit 50 identifies only the object having position coordinates (x,y) within the range of the palm region 200 as being the entering object.

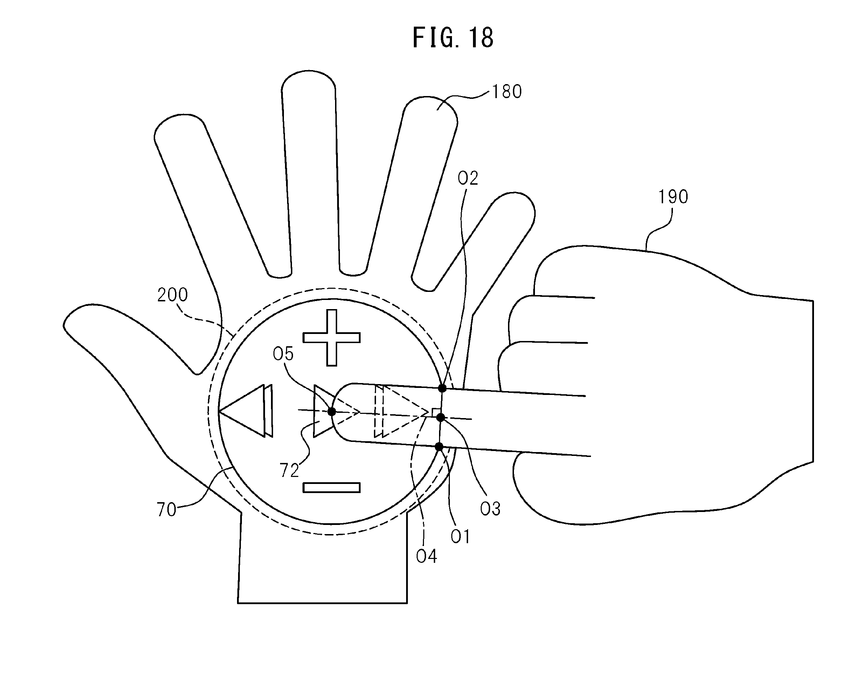

Figure 18 is a diagram showing, by way of example, the contour regions of the user's left hand 180 that have been grouped together by the control unit 50 in S54 of Figure 17, and an object (in the illustrated example, the user's right hand 190) entering the palm region 200. The control unit 50 identifies in S55 the entry positions 01 and 02 through which the right hand 190 as the entering object has entered the palm region 200. Next, the control unit 50 identifies the midpoint 03 between the entry positions 01 and 02, and identifies the position of the fingertip by detecting the point 05 at which a perpendicular 04 drawn from the midpoint 03 crosses the contour of the right hand 190 at the position farthest from the midpoint 03.

Alternatively, the contour region contained in the right hand 190 and located at the position farthest from the midpoint 03 between the entry positions 01 and 02 may be identified as the position of the fingertip. The above method of identifying the position of the fingertip based on the entry positions of the right hand 190 is only one example, and the position of the fingertip may be identified using some other suitable method.

Next, the control unit 50 determines whether the right hand 190 as the entering object is performing an information input operation (S56). Even if the right hand 190 exists within the palm region 200, the right hand 190 may have merely entered the palm region 200 without any intention of performing an information input operation. Therefore, if, for example, the point 05 of the fingertip position is located on the palm region 200, then the control unit 50 determines that the fingertip of the right hand 190 is performing an information input operation.

The control unit 50 determines whether the point 05 of the fingertip position is located on the palm region 200 or not, based on whether the difference between the depth data of the palm region 200 and the depth data of the point 05 of the fingertip position lies within a predetermined threshold (for example, within 10 mm).

The depth data of the point 05 of the fingertip position may fluctuate over a short period of time because of chattering, etc. Accordingly, in order to prevent an erroneous detection, the control unit 50 may determine that an information input has been done only when the difference between the depth data of the point 05 of the fingertip position and the depth data of the palm region 200 has remained within the predetermined threshold continuously for a predetermined length of time (for example, one second or longer).

If it is determined by the control unit 50 that the fingertip at the detected position is intended for an information input operation (Yes in S56), the position on the palm region 200 of each input button contained in the information input image 70 projected on the palm region 200 as shown in Figure 18 is identified based on the image data transmitted to the projection device 30 and the control data transmitted to the pan head 10 (S57).

Next, the control unit 50 identifies the kind of the information input operation, based on the point 05 of the fingertip position identified in S55 and the position of each input button on the palm region 200 identified in S57 (S58). For example, if the coordinates of the point 05 of the fingertip position lie within the range of the playback button 72 as shown in Figure 18, the control unit 50 determines that the operation indicated by the information input is "playback". If there is no input button that matches the point 05 of the fingertip position, it may be determined that there is no information input corresponding to it.

After that, the control unit 50 performs processing corresponding to the kind of the information input operation identified in S58 on the control target apparatus 60 (S59), and terminates the sequence of operations. For example, if the operation indicated by the identified information input is "playback", the control unit 50 sends a "playback" signal to the control target apparatus 60.

On the other hand, if it is determined by the control unit 50 that the fingertip at the detected position is not intended for an information input operation (No in S56), the process of Figure 17 is terminated.

The process flow of Figure 17 is performed when the target body part is identified in accordance with the process flow of Figure 14. Therefore, by just touching the fingertip to the desired input button (for example, the playback button 72) contained in the information input image 70 projected on the palm region 200, the user can perform information input, for example, for "playback" in a virtual environment without using a device such as a remote control.

In the process flow of Figure 17, the control unit 50 determines whether the user's left hand 180 as the target body part has been identified or not, and performs control so as to project the information input image 70 on the palm region 200 by detecting the palm region 200 from the target body part. Preferably, the control unit 50 has the function of tracking the movement of the target body part as the detected target body part moves (for example, as the user moves around or moves his/her left hand 180) so that the information input image 70 can always be projected on the palm region 200.

In S50 of Figure 17, the process proceeds to the subsequent steps when the target body part has been identified. However, a certain authentication process may be performed, and the process may proceed to the subsequent steps only when the detected body part has been identified as being the registered user's target body part. Possible methods of authentication include, for example, authentication by using the fingerprint, palm wrinkles, or vein pattern or the like contained in the left hand 180 identified as the entering object for detecting the palm region.

When performing an information input operation on the information input image 70 projected by using the user's body part such as the palm of his/her hand as the projection surface, as described above, the user's face 100 or eye 101 tends to enter the projection region indicated by dashed lines in Figure 13. Therefore, in this case also, the control unit 50 quickly detects the entering of such a particular object during the projection of the information input image, based on the sensing information acquired from the second sensing unit 25, as earlier described with reference to Figure 12. Then, when the presence of a particular object such as the face 100 or eye 101 is detected, the control unit 50 issues an alarm sound and sends a projection stop signal to the projection device 30 to stop projecting the information input image 70 which has been projected by using the visible laser light. This serves to greatly improve the eye safety.

To prevent the interference between the infrared light emitted from the first sensing unit 20 and the infrared light emitted from the second sensing unit 25 shown in Figure 2, the information input device 1 employs a polarization multiplexing method, so that the first sensing unit 20 and the second sensing unit 25 respectively use mutually perpendicular linearly polarized infrared lights. However, in the case of polarization multiplexing, if the infrared lights are projected on a depolarizing object, interference occurs, and the S/N ratio decreases. In view of this, instead of employing such a polarization multiplexing method, a wavelength multiplexing method may be employed in which the first sensing unit 20 and the second sensing unit 25 use infrared lights of different wavelengths and the infrared lights reflected and passed through filters are received by the infrared camera 22 and the infrared light sensing unit 27, respectively; in this case also, the occurrence of interference can be prevented.

Alternatively, a time multiplexing method may be employed to prevent the occurrence of interference; in this case, the first infrared light emitting unit 21 in the first sensing unit 20 and the second infrared light emitting unit 26 in the second sensing unit 25 are controlled to emit the infrared lights at different emission timings, that is, staggered emission timings. It is also possible to prevent the occurrence of interference by suitably combining the above methods.

Further, the infrared camera 22 shown in Figure 22 may be used in combination with a monochrome camera having sensitivity to visible light for capturing a monochrome image or a color camera for capturing a color image. For example, the first sensing unit 20 may include a camera module constructed from a combination of a camera for capturing a color image and an infrared camera for acquiring depth information. It thus becomes possible to check the projected image in real time by using a visible light camera.

For example, when a color camera for capturing a color image is used, color data such as RGB can also be detected. As a result, even when a ring or a wrist watch or the like is worn on the hand, finger, or arm to be detected, such objects can be discriminated based on the color data, and only the skin-tone image region of the hand can be accurately identified.

Further, the projection device 30 may be configured to also serve as the second infrared light emitting unit 26 in the second sensing unit 25. In that case, the infrared beam as well as the visible laser light for projecting the information input image, for example, is projected from the projection unit 30a onto the projection surface, and the infrared light sensing unit such as a photodiode receives the light reflected from an object and passed through an infrared band-pass filter.

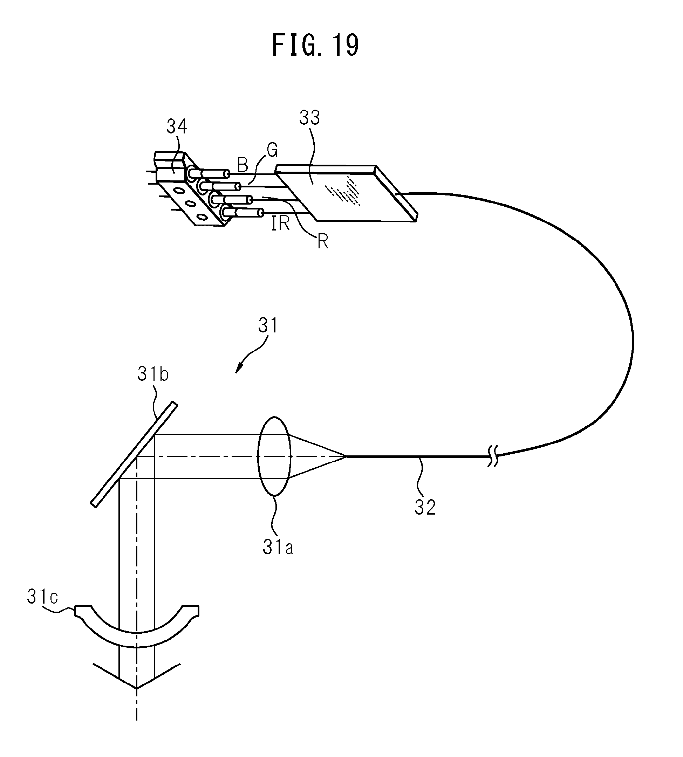

Figure 19 is a diagram schematically illustrating another configuration example of the projection device 30. The projection device 30, when configured to also serve as the second infrared light emitting unit 26, for example, as illustrated in Figure 19, includes a scanning-type projection unit 31, a single-mode fiber 32, a wide-band fiber combiner 33, and a fiber pigtail module 34. In the illustrated configuration, the visible laser lights emitted from the R, G, and B laser light sources and the infrared (IR) laser light emitted from the infrared laser light source are coupled into their respective optical fibers by means of the fiber pigtail module 34. The wide-band fiber combiner 33 combines the R, G, B, and IR laser lights guided through the respective optical fibers. The combined light is then guided through the single-mode fiber 32 to the scanning-type projection unit 31.

In the projection unit 31, the laser light emitted from the single-mode fiber 32 is directed toward a MEMS mirror 31b through an illumination optic 31a, and the light reflected from the MEMS mirror 31b is projected on the earlier described projection surface through a projection optic 31c. By vibrating the MEMS mirror 31b about mutually perpendicular two axes, the laser light being projected can be scanned at high speed in a two-dimensional fashion. In this way, the projection device 30 can be configured to also serve as the second infrared light emitting unit 26. Further, a beam splitter may be inserted in the path between the illumination optic 31a and the MEMS mirror 31b in Figure 19; in this case, the light reflected from the object irradiated with the infrared light can be separated, passed through an infrared band-pass filter, and detected by the infrared light sensing unit such as a photodiode.

Instead of the earlier described TOF method, a random dot pattern method may be used by the second sensing unit to measure the distance to the detected object. In the TOF method, since the computation has to be performed at high speed at all times in order to obtain high resolution in real time, the CPU 51 is required to have a high computational capability. On the other hand, the random dot pattern method is a method that is based on the principle of triangulation, and that calculates the distance from the amount of horizontal displacement of the pattern by utilizing the autocorrelation properties of an m-sequence code or the like and detects as the autocorrelation value the lightness and darkness of the pattern overlapping caused by the bit shifting of the obtained image data. By repeatedly performing cross-correlation processing with the original pattern, the method can detect the position with the highest correlation value as representing the amount of displacement.

Further, in the random dot pattern method, the whole process from the generation of the random dot pattern to the comparison of the patterns can be electronically performed by storing the original m-sequence code pattern in an electronic memory and by successively comparing it with reflection patterns for distance measurement. In this method, since the dot density can be easily changed according to the distance desired to be detected, highly accurate depth information can be obtained, compared with a method that optically deploys a random dot pattern in space by a projection laser in combination with a fixed optical hologram pattern. Furthermore, if part of the function, such as the generation of the random dot pattern, is implemented using a hardware circuit such as a shift register, the computational burden can be easily reduced.

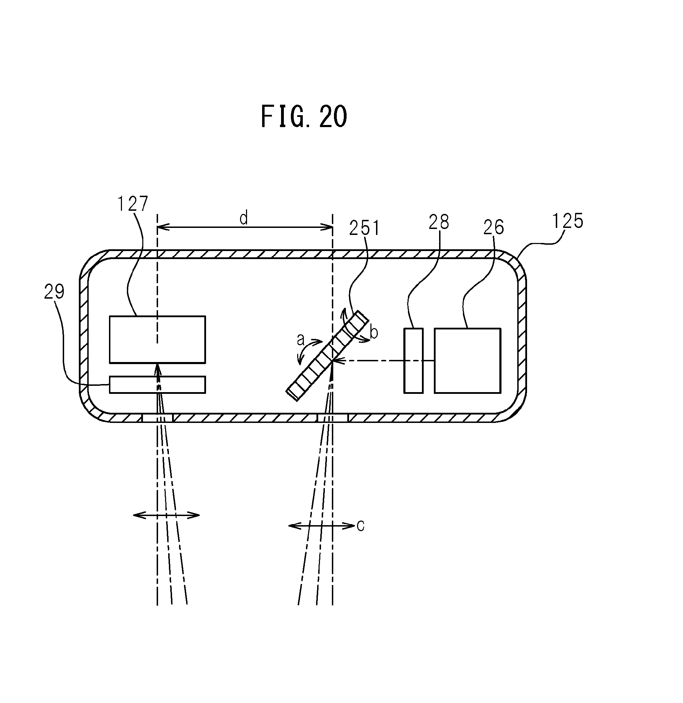

Figure 20 is a schematic cross-sectional view illustrating a specific configuration example of a second sensing unit 125 when a random dot pattern is used. A dot pattern generated by using an m-sequence code known as pseudo-random noise is output from the second infrared light emitting unit 26 and scanned by the MEMS mirror 251 to project a random dot pattern image. A line image sensor 127 as the infrared light sensing unit is disposed at a position a distance "d" away from the image projecting point. The line image sensor 127 detects a reflection of an infrared beam of the random dot pattern projected by the scanning of the MEMS mirror 251 and reflected from the target object.

Let L denote the distance from the line image sensor 127 to the reference plane serving as the original pattern, and W denote the value representing the amount of horizontal displacement of a specific pattern generated by the scanning of the MEMS mirror 251 and converted to the amount of displacement on the reference plane located at the distance L; then, from the principle of triangulation, the distance Z to the object is obtained from the following equation.

$$Z = (d \cdot L)/(d+W) \hspace{3cm} (1)$$

For each line scan of the MEMS mirror 251, the line image sensor 127 integrates the random dot pattern reflected from the object, and acquires the result as one-dimensional image information. The control unit 50 in Figure 2 compares the acquired pattern with the original pattern, measures the amount of horizontal positional displacement by detecting a match of the cross-correlation value, and acquires the distance data from the equation of triangulation. By repeatedly performing this process for each line scan, the distance to the object can be detected in near real time. In this case, the random dot pattern may be the same for each line.

Since the line image sensor 127 is one dimensional (rectilinear), only the depth data on a one-dimensional line can be obtained, unlike the case of the commonly used two-dimensional dot pattern. However, since the line image sensor 127 is synchronized to each line scan of the MEMS mirror 251, it is possible to determine the line position located in the direction perpendicular to the line scan direction and held within the frame generated by the MEMS mirror 251. As a result, it is possible to convert the acquired data to two-dimensional data. Furthermore, since the presence or absence of a particular object is determined by also using the image data captured by the first sensing unit, the deficiency that only the depth data on one-dimensional line can be obtained by the line image sensor 127 does not present any problem in practice.

Since the second sensing unit 125 can track the movement of the object and measure the distance to the object on a per line scan basis, as described above, it becomes possible, despite its simple configuration, to measure the distance at high speed even when the object is moving.

Another method for measuring the distance to the detected object is the PSD method. This method detects the light intensity centroid position of the infrared light reflected from the object by using a position sensitive device (PSD) as the infrared light sensing unit instead of the line image sensor 127. Similarly to the random dot pattern method, the PSD method measures a change in the distance to the object from the amount of horizontal positional displacement by using the principle of triangulation, and a change in the angle of reflection off of the object due to the positional change in the horizontal direction is detected as a change in the light intensity centroid position. In the case of the line image sensor, the control unit 50 needs to construct the entire image from the amount of received light measured on each cell of the sensor, but in the case of the PSD method, since information representing the light intensity centroid position is output from the position sensitive device itself, it becomes possible to detect any positional change in the horizontal direction by just monitoring this information, and thus the distance to the object can be measured. This offers the advantage of being able to further simplify the configuration of the control unit 50.

While various embodiments and modified examples of the information input device according to the present invention have been described above, the information input device is not limited to any particular example described herein, but it will be appreciated that various other changes, additions, omissions, combinations, etc., can be applied without departing from the scope defined in the appended claims.

INDUSTRIAL APPLICABILITY

The present invention can be used as an information input device for virtual remote control that remotely controls various kinds of control target apparatus such as, for example, an air-conditioner, a network access apparatus, a personal computer, a television receiver, a radio receiver, or a recording and playback apparatus of a recording medium such as a CD, DVD, or VTR.

REFERENCE SIGNS LIST

| | |
|---|---|
| 1 | information input device |
| 12 | first rotating part |
| 13 | second rotating part |
| 20 | first sensing unit |
| 21 | first infrared light emitting unit |
| 22 | infrared camera |
| 25 | second sensing unit |
| 26 | second infrared light emitting unit |
| 27 | infrared light sensing unit |
| 30 | projection device |
| 30a | projection unit |
| 50 | control unit |
| 70 | information input image |
| 251 | MEMS mirror |

**Claims**

1. An information input device comprising:

   a projection unit which projects an information input image by using visible laser light;
   a movable support unit which mounts the projection unit thereon in such a manner that a projection position on which the information input image is to be projected by the projection unit can be changed;
   a first sensing unit which captures an image of a sensing region within which the information input image can be projected;
   a second sensing unit which is mounted on the movable support unit, and which detects an object entering a predetermined region containing the projection position of the information input image and detects a distance to the object;
   an information input detection unit which detects information input by identifying, based on image data captured by the first sensing unit, an image of an input operation being performed on the information input image; and
   an identification control unit which identifies, based on information acquired by the second sensing unit, the presence or absence of a particular object entering the predetermined region and, if the entering of a particular object is detected, then causes the projection unit to stop projecting the information input image.

2. The information input device according to claim 1, wherein the information input detection unit detects information input by identifying, based on image data captured by the first sensing unit and information acquired by the second sensing unit, an image of an input operation being performed on the information input image.

3. The information input device according to claim 1 or 2, wherein the identification control unit identifies, based on image data captured by the first sensing unit and information acquired by the second sensing unit, the presence or absence of a particular object entering the predetermined region and, if the entering of a particular object is detected, then causes the projection unit to stop projecting the information input image.

4. The information input device according to any one of claims 1 to 3, wherein the identification control unit identifies a human eye, nose, ear, mouth, face contour, or face as a particular object.

5. The information input device according to any one of claims 1 to 4, wherein the second sensing unit includes an infrared light emitting unit, an infrared light sensing unit, and a scanning unit which scans the predetermined region in a two-dimensional fashion with an infrared beam that the infrared light emitting unit emits.

6. The information input device according to claim 5, wherein the second sensing unit detects the distance to the object entering the predetermined region by using a random dot pattern.

7. The information input device according to claim 5, wherein the second sensing unit detects the distance to the object entering the predetermined region by using a position sensitive device.

8. The information input device according to any one of claims 1 to 7, wherein the first sensing unit includes an infrared light emitting unit and an infrared camera.

9. The information input device according to claim 8, wherein the first sensing unit and the second sensing unit respectively use mutually perpendicular linearly polarized infrared lights.

10. The information input device according to claim 8, wherein the first sensing unit and the second sensing unit respectively use infrared lights of different wavelengths.

11. The information input device according to claim 8, wherein the infrared light emitting unit in the first sensing unit and the infrared light emitting unit in the second sensing unit have respectively different emission timings.

12. The information input device according to any one of claims 1 to 7, wherein the first sensing unit includes a camera module constructed from a combination of a camera for capturing a color image and an infrared camera for acquiring depth information.

13. The information input device according to any one of claims 1 to 12, further comprising a projection position control unit which, based on image data captured by the first sensing unit, identifies a target object on which the information input image is to be projected, and controls the movable support unit so as to cause the projection unit to project the information input image by tracking the position of the target object.

# FIG. 1

EP 2 889 733 A1

# FIG. 2

# FIG. 3

# FIG. 4

# FIG. 5

```
                    START

S10
            SPECIFY                      N
      POSITION OF PROJECTION
            SURFACE?

              │Y

      STORE POSITION COORDINATE DATA    S11
      INDICATING RANGE OF SPECIFIED
          PROJECTION SURFACE

          ACQUIRE DEPTH DATA            S12
          OF PROJECTION SURFACE

      STORE DEPTH DATA FOR EACH PIXEL   S13
      CONTAINED IN PROJECTION SURFACE

      MOVE REFERENCE PROJECTION IMAGE   S14

      ACQUIRE POSITION COORDINATE DATA  S15

          IDENTIFY POSITION OF          S16
        REFERENCE PROJECTION IMAGE

      STORE MAPPING BETWEEN CONTROL     S17
        DATA AND POSITION OF
        REFERENCE PROJECTION IMAGE

S18
          MOVING COMPLETED?             N

              │Y

                    END
```

FIG. 6

FIG. 7

FIG. 8

FIG. 9

# FIG. 10

START

ACQUIRE IMAGE DATA AND CONTROL DATA — S20

ACQUIRE POSITION COORDINATE DATA AND DEPTH DATA — S21

IDENTIFY CONTOUR REGIONS BASED ON POSITION COORDINATE DATA — S22

GROUP TOGETHER CONTOUR REGIONS BASED ON DEPTH DATA — S23

IDENTIFY ENTRY POSITIONS OF ENTERING OBJECT AND POSITION OF FINGERTIP — S24

S25 — INFORMATION INPUT OPERATION? — N

Y

BASED ON IMAGE DATA AND CONTROL DATA, IDENTIFY POSITION ON PROJECTION SURFACE OF EACH INPUT BUTTON CONTAINED IN INFORMATION INPUT IMAGE — S26

IDENTIFY KIND OF INFORMATION INPUT OPERATION — S27

PERFORM PROCESSING CORRESPONDING TO IDENTIFIED INFORMATION INPUT OPERATION — S28

END

# FIG. 11

# F I G. 12

START

S30 — IS INFORMATION INPUT IMAGE BEING PROJECTED? — N

↓ Y

ACTIVATE SECOND SENSING UNIT — S31

ACQUIRE POSITION COORDINATE DATA AND DEPTH DATA — S32

IDENTIFY CONTOUR REGIONS BASED ON POSITION COORDINATE DATA — S33

GROUP TOGETHER CONTOUR REGIONS BASED ON DEPTH DATA — S34

S35 — HAS ANY OBJECT BEEN DETECTED BY FIRST SENSING UNIT? — N

↓ Y

S36 — ENTERING OF PARTICULAR OBJECT IS DETECTED BY SECOND SENSING UNIT? — N

↓ Y

S37 — STOP PROJECTING INFORMATION INPUT IMAGE (ISSUE ALARM SOUND)

END

# FIG. 13

# FIG. 14

```
                    ┌─────────┐
                    │  START  │
                    └────┬────┘
                         ↓
┌────────────────────────────────────────────────┐
│ ACQUIRE POSITION COORDINATE DATA AND DEPTH DATA │──S40
└────────────────────────┬───────────────────────┘
                         ↓
┌────────────────────────────────────────────────┐
│           IDENTIFY CONTOUR REGIONS BASED        │──S41
│             ON POSITION COORDINATE DATA         │
└────────────────────────┬───────────────────────┘
                         ↓
┌────────────────────────────────────────────────┐
│   GROUP TOGETHER CONTOUR REGIONS BASED ON DEPTH DATA │──S42
└────────────────────────┬───────────────────────┘
                         ↓
        S43                     N
            ◇─── TARGET BODY PART? ───┐
                         │Y           │
                         ↓            │
S44 ┌─────────────────────────────────┐      │
    │   ACQUIRE DEPTH DATA OF PALM REGION │    │
    └─────────────┬───────────────────┘      │
                  ↓                           │
S45 ┌─────────────────────────────────────┐  │
    │ PROJECT INFORMATION INPUT IMAGE ON PALM REGION │  │
    └─────────────┬───────────────────────┘  │
                  ↓←─────────────────────────┘
             ┌─────────┐
             │   END   │
             └─────────┘
```

FIG. 15

FIG. 16

# FIG. 17

START

S50 — TARGET BODY PART? — N

Y

ACQUIRE IMAGE DATA AND CONTROL DATA — S51

ACQUIRE POSITION COORDINATE DATA AND DEPTH DATA — S52

IDENTIFY CONTOUR REGIONS BASED ON POSITION COORDINATE DATA — S53

GROUP TOGETHER CONTOUR REGIONS BASED ON DEPTH DATA — S54

IDENTIFY ENTRY POSITIONS TO PALM REGION AND FINGERTIP POSITION — S55

S56 — INFORMATION INPUT OPERATION? — N

Y

S57 — BASED ON IMAGE DATA AND CONTROL DATA, IDENTIFY POSITION ON PALM REGION OF EACH INPUT BUTTON CONTAINED IN INFORMATION INPUT IMAGE

S58 — IDENTIFY KIND OF INFORMATION INPUT OPERATION

S59 — PERFORM PROCESSING CORRESPONDING TO IDENTIFIED INFORMATION INPUT OPERATION

END

EP 2 889 733 A1

FIG. 18

# FIG. 19

# FIG. 20

## INTERNATIONAL SEARCH REPORT

| International application No. |
|---|
| PCT/JP2013/072463 |

A. CLASSIFICATION OF SUBJECT MATTER
*G06F3/041*(2006.01)i, *G02B26/10*(2006.01)i, *G03B21/00*(2006.01)i, *G06F3/042* (2006.01)i, *H04N5/74*(2006.01)i

According to International Patent Classification (IPC) or to both national classification and IPC

B. FIELDS SEARCHED

Minimum documentation searched (classification system followed by classification symbols)
G06F3/041, G02B26/10, G03B21/00, G06F3/042, H04N5/74

Documentation searched other than minimum documentation to the extent that such documents are included in the fields searched
Jitsuyo Shinan Koho            1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2011/012168 A1 (LEMOPTIX SA), 03 February 2011 (03.02.2011), page 2, lines 23 to 26; page 16, lines 4 to 20; page 20, line 11 to page 21, line 14; fig. 12 & JP 2013-501247 A | 1-13 |
| Y | WO 2009/022659 A1 (Panasonic Electric Works Co., Ltd.), 19 February 2009 (19.02.2009), paragraphs [0005], [0025] to [0033]; fig. 1 & US 2010/0141897 A1 | 1-13 |
| A | JP 2000-194302 A (Brother Industries, Ltd.), 14 July 2000 (14.07.2000), paragraphs [0006], [0012] (Family: none) | 1-13 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 September, 2013 (18.09.13) | 01 October, 2013 (01.10.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2013/072463

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2009/031094 A1  (PHILIPS INTELLECTUAL PROPERTY & STANDARDS GMBH), 12 March 2009 (12.03.2009), page 2, lines 20 to 26 (Family: none) | 1-13 |

Form PCT/ISA/210 (continuation of second sheet) (July 2009)

**EP 2 889 733 A1**

**Patent documents cited in the description**

- JP H1195895 B
- US 20100199232 A